# EUROPÄISCHE PATENTANMELDUNG

(11) **EP 2 896 480 A1**
(43) Veröffentlichungstag der Anmeldung: **22.07.2015**
(21) Anmeldenummer: 14198281.9
(22) Anmeldetag: 16.12.2014
(51) Int. Cl.: B23K 1/20, B23K 3/08, B23K 35/365

(54) **Verfahren zum Aufbringen eines Flussmittels**

(30) Priorität: 21.01.2014 DE 102014201014
(71) Anmelder: MAHLE Behr GmbH & Co. KG, 70469 Stuttgart (DE)
(72) Erfinder: Rodriguez-Martinez, Tomas, 70374 Stuttgart (DE); Trautwein, Ingo, 74321 Bietigheim Bissingen (DE); Skiba, Erwin, 70563 Stuttgart (DE)
(74) Vertreter: BRP Renaud & Partner mbB Rechtsanwälte Patentanwälte Steuerberater

(57) **Zusammenfassung**

Die vorliegende Erfindung betrifft ein Verfahren zum Aufbringen eines Flussmittels (2) auf eine Bauteiloberfläche (3) zum späteren Hartlöten, insbesondere bei Bauteilen (5) aus Aluminium, wobei das zu befluxende Bauteil (3) mit einem zumindest nahezu wasserfreien und rieselfähigen Flussmittel (2) bestreut wird, welches auf der Oberfläche (3) des Bauteils (5) haften bleibt.

Hierdurch ist kostengünstiges und sauberes Aufbringen eines Flussmittels (2) auf eine Bauteiloberfläche (3) im Vergleich zum bisher bekannten Aufsprühen einer wässrigen Flussmittelsuspension möglich.

## Beschreibung

Die vorliegende Erfindung betrifft ein Verfahren zum Aufbringen eines Flussmittels auf eine Bauteiloberfläche zum späteren Hartlöten. Die Erfindung betrifft außerdem eine Vorrichtung zum automatisierten Aufbringen von Flussmittel auf eine Bauteiloberfläche sowie ein hierfür geeignetes rieselfähiges Flussmittel.

Zum Hartlöten lotplatierter Einzelteile, insbesondere Wärmetauscher, das heißt insbesondere von Kühlern, Verdampfern, Rohren, Kondensatoren, etc., wie sie in der Automobilbranche verwendet werden, ist es bei der Verwendung von Aluminium bzw. Aluminiumlegierungen als Grundmaterial der Bauteile derzeit üblich, spezielle Lötverfahren einzusetzen, insbesondere das sogenannte CAB-Löten. Um dabei eine möglichst gute kapillare Aufnahme des Lots zu erreichen, wird die zu verlötende Materialoberfläche vorab mit einem Flussmittel beschichtet, was als sogenanntes "Befluxen" bezeichnet wird. Dies erfolgt üblicherweise mittels einer wässrigen Flussmittelsuspension, die im Sprühverfahren auf die zu beschichtende Materialoberfläche aufgebracht wird. Vor dem eigentlichen Lötvorgang muss diese wässrige Flussmittelsuspension jedoch getrocknet sein, wozu spezielle Trockner verwendet werden. Diese sind üblicherweise direkt nach den Sprühkabinen angeordnet und beheizt, um den Trocknungsvorgang zu beschleunigen. Das erforderliche aktive Trocknen der wässrigen Flussmittelsuspension erfordert jedoch einen hohen Energieaufwand, da das noch vorhandene Wasser verdampft werden muss und der aufgrund stetig steigender Energiekosten zunehmend die Herstellkosten von beispielsweise Wärmetauschern negativ beeinflusst. Neben den hohen Energiekosten bedingen derartige Trockner üblicherweise auch vergleichsweise hohe Instandhaltungskosten, welche sich ebenfalls negativ auf die Gesamtkostensituation auswirken. Ein weiterer gravierender Nachteil bei dem Aufsprühen eines wässrigen Flussmittels besteht darin, dass das Arbeitsumfeld in nicht unerheblichem Maße verschmutzt wird und zudem eine Gesundheitsgefährdung durch lungengängigen CAB-Flux-Staub (Controlled Atmosphäre Brazing) bestehen kann.

Die vorliegende Erfindung beschäftigt sich daher mit dem Problem, ein geändertes Verfahren sowie eine modifizierte Vorrichtung zum Befluxen von Bauteiloberflächen anzugeben, die die aus dem Stand der Technik bekannten Nachteile nicht mehr aufweisen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, zum Befluxen von Bauteiloberflächen, das heißt zum Aufbringen eines Flussmittels auf eine solche Bauteiloberfläche, nicht mehr wie bisher ein wässriges Flussmittel zu verwenden, welches anschließend energieaufwändig und technisch anspruchsvoll getrocknet werden muss, sondern ein zumindest nahezu wasserfreies und rieselfähiges Flussmittel, sodass der Trocknungsvorgang entfallen kann. Bei dem erfindungsgemäßen Verfahren zum Aufbringen eines Flussmittels auf einer Bauteiloberfläche zum späteren Hartlöten, wird somit das zu beschichtende bzw. zu befluxende Bauteil mit dem soeben beschriebenen, vorzugsweise wasserfreien und rieselfähigen Flussmittel bestreut, welches aufgrund einer Haftwirkung selbstständig auf der Oberfläche des Bauteils haften bleibt. Eine derartige Haftwirkung kann beispielsweise durch ein entsprechendes Agglomerationsmittel, insbesondere ein Wachs, ein thermisch zersetzbares Harz, einen Polyvinylalkohol oder einen Kleber erreicht werden. Bei Verwendung eines derartigen Agglomerationsmittels wird das zu befluxende Bauteil vor dem Aufbringen des Flussmittels üblicherweise entfettet. Alternativ hierzu ist auch denkbar, dass das zu befluxende Bauteil vor dem Aufbringen des Flussmittels nicht entfettet wird, so dass der dort noch auf der Bauteiloberfläche vorhandene Ölfilm als Agglomerationsmittel bzw. als Haftmittel für das rieselfähige Flussmittel verwendet werden kann. Durch die erfindungsgemäße Verwendung des zumindest nahezu wasserfreien und rieselfähigen Flussmittels können die bisher hohen Kosten zur Verdampfung des Wassers und damit zur Trocknung des Flussmittels sowie die hohen Instandhaltungskosten gänzlich eingespart werden. Gleichzeitig kann eine Verschmutzung des Arbeitsumfeldes ebenso wie eine mögliche Gesundheitsgefährdung durch lungengängigen CAB-Flux-Staub reduziert werden. Von entscheidendem Vorteil ist auch, dass eine Lötstation insgesamt kompakter gebaut werden kann, da die nunmehr erforderliche Ofenlänge für eine beschädigungsfreie Erwärmung der Bauteile aufgrund der wegfallenden Trocknung des Flussmittels deutlich kürzer gehalten werden kann.

Die vorliegende Erfindung beruht weiter auf dem allgemeinen Gedanken, eine Vorrichtung zum automatisierten Aufbringen von Flussmittel auf eine Bauteiloberfläche anzugeben, die nunmehr keine Sprühkabine mehr besitzt sondern eine Rieselkabine, in welcher das zu befluxende Bauteil mit dem zumindest nahezu wasserfreien und rieselfähigen Flussmittel berieselt wird. Aufgrund des dem Flussmittel zugesetzten Agglomerationsmittels und/oder des noch auf der Bauteiloberfläche vorhandenen Öls, bleibt das rieselfähige Flussmittel auf der Oberfläche des Bauteils haften, wodurch ein qualitativ hochwertiger Beschichtungsprozess erzielt werden kann. Eine derartige Vorrichtung ist im Vergleich zu bisherigen Vorrichtungen aufgrund der nunmehr entfallenden Trocknung auch hinsichtlich ihrer Instandhaltungs- und Unterhaltskosten deutlich kostengünstiger.

Bei einer vorteilhaften Weiterbildung der erfindungsgemäßen Lösung weist die Vorrichtung eine Fördereinrichtung, insbesondere in der Art eines Fließbandes auf, auf welchem das zu befluxende Bauteil durch die Rieselkabine gefahren wird. Hierdurch ist ein kontinuierliches Aufbringen von Flussmittel auf unterschiedliche Bauteiloberflächen im Sinne der Fließbandtechnik möglich, wodurch kurze Taktzeiten und hohe Ausstoßzahlen erzielt werden können.

Bei einer weiteren vorteilhaften Ausführungsform der erfindungsgemäßen Lösung ist bodenseitig der Rieselkabine ein Sammelraum für das rieselfähige Flussmittel angeordnet, wobei dieser Sammelraum über einen Pulverförderer mit einer deckenseitig der Rieselkabine angeordneten Rieseldüse verbunden ist. Der Pulverförderer kann hierzu beispielsweise als Gebläse oder als Schneckenförderer ausgebildet sein. Im günstigsten Falle fällt somit das wasserfreie und rieselfähige Flussmittel aufgrund seiner Schwerkraft aus der Rieseldüse nach unten und beschichtet dabei das zu befluxende Bauteil. Überschüssiges Flussmittel, welches nicht auf der Bauteiloberfläche haften bleibt, fällt anschließend in den unterhalb der zu beschichtenden Bauteile angeordneten Sammelraum und kann von dort einem erneuten Beschichtungsvorgang zugeführt werden. Durch das rieselfähige Flussmittel kann ein insgesamt äußerst sauberer Befluxungsvorgang bzw. -prozess geschaffen werden, der ein Arbeitsumfeld deutlich weniger verschmutzt, als dies bei bisher sprühfähigen Flussmitteln der Fall war. Bei sprühfähigen Flussmitteln war zudem ständig die Gefahr gegeben, dass das Flussmittel durch Trocknungsvorgänge verklebt und beispielsweise an den Sprühdüsen Verkrustungen entstehen, die ein weiteres einwandfreies Befluxen der Bauteiloberflächen verhindern. Der Instandhaltungs- und Reinigungsaufwand derartiger Sprühkabinen war deshalb unverhältnismäßig höher.

Zweckmäßig ist ein der Vorrichtung nachgeschalteter Ofen vorgesehen, in welchem das zu verlötende Bauteil erhitzt und gleichzeitig das Agglomerationsmittel des Flussmittels zumindest teilweise zersetzt wird. In diesem Ofen wird das Bauteil erwärmt, um den Heizaufwand in einem sich dem Ofen nachgeschalteten Lötofen möglichst gering zu halten. Hierdurch kann der Lötofen selbst eine deutlich geringere Länge aufweisen, da die zu verlötenden Bauteile bereits in erhitztem Zustand dem Lötofen zugeführt werden. Das Aufheizen der Bauteile in dem dem Lötofen vorgeschalteten Ofen ist dabei deutlich kostengünstiger auszuführen, da in dem Ofen die normale Luftatmosphäre herrscht, wogegen im Lötofen selbst eine Schutzatmosphäre vorliegt. In dem Ofen können darüber hinaus die organischen Bestandteile, das heißt beispielsweise die Agglomerationsmittel des Flussmittels entfernt und dadurch das Flussmittel mit der Bauteiloberfläche verklebt werden. Dies kann insbesondere erforderlich sein, sofern der Rieselkabine eine Entfettungsstation vorgeschaltet ist, in welcher das Bauteil entfettet und beispielsweise ein auf der Bauteiloberfläche haftender Ölfilm entfernt wird. Wird diese Entfettungsstation nicht vorgesehen, so kann die Haftung des Flussmittels durch den noch auf der Bauteiloberfläche vorhandenen Ölfilm bzw. Ölreste erzielt werden, so dass in dem Ofen selbst lediglich das Aufheizen der Bauteile auf nahezu Löttemperatur, nicht jedoch das zumindest teilweise Zersetzen der Agglomerationsmittel erfolgen muss. Dies stellt einen besonders kostengünstigen und effizienten Beschichtungsvorgang dar.

Die vorliegende Erfindung beruht weiter auf dem allgemeinen Gedanken, erstmals ein rieselfähiges Flussmittel anzugeben, welchem beispielsweise ein Agglomerationsmittel, insbesondere ein Wachs, ein thermisch zersetzbares Harz, ein Polyvinylalkohol oder ein Kleber zugesetzt ist. Selbstverständlich kann ein derartiges erfindungsgemäßes Flussmittel sowohl bei einer Vorrichtung mit oder ohne Entfettungsstation eingesetzt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine erfindungsgemäße Vorrichtung zum automatisierten Aufbringen von Flussmittel auf eine Bauteiloberfläche,
- Fig. 2: eine in eine Lötstation eingebettete erfindungsgemäße Vorrichtung mit vorgeschalteter optionaler Entfettungsstation und nachgeschaltetem Ofen.

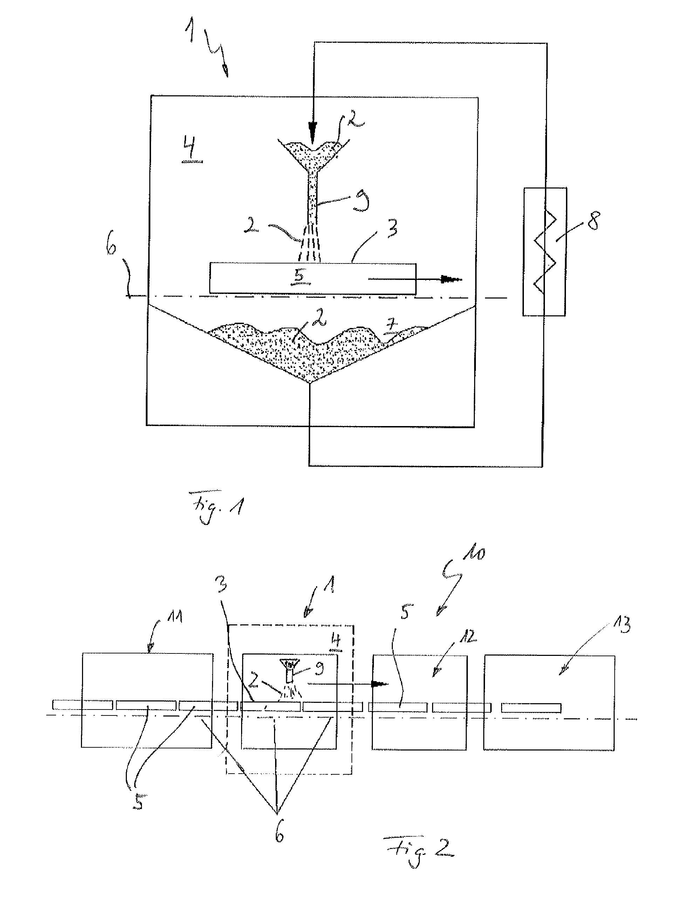

Entsprechend der Fig. 1 weist eine erfindungsgemäße Vorrichtung 1 zum automatisierten Aufbringen von Flussmittel 2 auf eine Bauteiloberfläche 3 eine Rieselkabine 4 auf, in welcher das zu befluxende, das heißt zu beschichtende Bauteil 5 mit einem erfindungsgemäßen und zumindest nahezu wasserfreien und rieselfähigen Flussmittel 2 berieselt wird. Das Flussmittel 2 bleibt dabei aufgrund einer Haftwirkung auf der Oberfläche 3 des Bauteils 5 haften. Die Vorrichtung 1 weist vorzugsweise eine Fördereinrichtung 6, insbesondere in der Art eines Fließbandes, auf, auf welchem das zu befluxende, das heißt zu beschichtende Bauteil 5 durch die Rieselkabine 4 gefahren werden kann. Eine derartige Fördereinrichtung 6 ermöglicht ein kontinuierliches und ununterbrochenes Beschichten der Bauteile 5. Bodenseitig der Rieselkabine 4 ist darüber hinaus ein Sammelraum 7 für das rieselfähige Flussmittel 2 angeordnet, wobei der Sammelraum 7 über einen Pulverförderer 8 mit einer deckenseitig der Rieselkabine 4 angeordneten Rieseldüse 9 verbunden ist. Das somit nicht auf der Bauteiloberfläche 3 haftend verbleibende Flussmittel 2 kann nach Abfallen in den Sammelraum 7 mittels des Pulverförderers 8 einem erneuten Beschichtungsvorgang wieder zugeführt werden. Der Pulverförderer 8 selbst kann beispielsweise als Gebläse oder als Schneckenförderer ausgebildet sein.

Betrachtet man die Lötstation 10 gemäß der Fig. 2, so ist in diese die erfindungsgemäße und gemäß der Fig. 1 dargestellte Vorrichtung 1 eingebunden. Optional vorgesehen sein kann eine der Vorrichtung 1 vorgeschaltete Entfettungsstation 11, in welcher das zu beschichtende Bauteil 5 entfettet wird. Hierbei ist anzumerken, dass diese Entfettungsstation 11 nicht zwingend vorgeschrieben ist. Der Vorrichtung 1 nachgeschaltet ist ein Ofen 12, in welchem das später in einem Lötofen 13 zu verlötende Bauteil 5 erhitzt und gleichzeitig ein in dem Flussmittel 2 enthaltendes Agglomerationsmittel zumindest teilweise zersetzt wird.

Das für das erfindungsgemäße Verfahren verwendete erfindungsgemäße Flussmittel 2 ist nicht nur rieselfähig ausgebildet, sondern kann bei einer speziellen Ausführungsform auch ein Agglomerationsmittel, beispielsweise ein Wachs, ein thermisch zersetzbares Harz, einen Polyvinylalkohol oder einen Kleber aufweisen, welches die entsprechende Haftwirkung auf der Bauteiloberfläche 3 entfaltet. Dies ist insbesondere dann erforderlich, sofern die Lötstation 10 gemäß der Fig. 2 eine Entfettungsstation 11 aufweist, in welcher insbesondere auf der Bauteiloberfläche 3 anhaftende Ölreste entfernt und dadurch für das Haften des Flussmittels 2 nicht weiter verwendet werden können. Alternativ ist auch denkbar, dass das erfindungsgemäße Flussmittel 2 kein Agglomerationsmittel aufweist, wobei in diesem Fall das auf der Bauteiloberfläche 3 des zu beschichtenden Bauteils 5 anhaftende Öl als Haftmittel verwendet wird. In diesem Fall besitzt die Lötstation 10 gemäß der Fig. 2 keine Entfettungsstation 11, da diese die Ölreste in unerwünschter Weise entfernen würde.

Der Ofen 12 ist bei der Lötstation 10 gemäß der Fig. 2 jedoch stets vorhanden, um das zu verlötende Bauteil 5 vor dem Eintritt in den eigentlichen Lötofen 13 aufzuheizen und Öl- und Binderreste vom Bauteil 5 zu verdampfen. In dem Ofen 12 muss jedoch lediglich das im sich daran anschließenden Lötofen 13 zu verlötende Bauteil 5 erhitzt, nicht jedoch wie bisher ein Wasseranteil des Flussmittels verdampft werden, wodurch die erforderlich Energie im Bereich des Ofens 12 deutlich kleiner gehalten werden kann. Auch ist es möglich, die Ofenlänge des Ofens 12 zu reduzieren, da eben kein Verdampfen eines Wasseranteils des Flussmittels mehr erforderlich ist und das Erwärmen des Bauteils 5 selbst in deutlich kürzerer Zeit möglich ist.

Mit dem erfindungsgemäßen wasserfreien und rieselfähigen Flussmittel 2 können somit die Kosten für die Verdampfung des bisherigen Wasseranteils im Flussmittel und die Kosten für die Instandhaltung deutlich reduziert werden, ebenso wie eine Verschmutzung des Arbeitsumfeldes, da mit dem rieselfähigen erfindungsgemäßen Flussmittel 2 ein vergleichsweise sauberes Beschichten möglich ist. Auch kann eine mögliche Gesundheitsgefährdung durch beispielsweise lungengängigen CAB-Flux-Staub reduziert werden.

## Patentansprüche

1. Verfahren zum Aufbringen eines Flussmittels (2) auf eine Bauteiloberfläche (3) zum späteren Hartlöten, insbesondere bei Bauteilen (5) aus Aluminium, wobei das zu befluxende Bauteil (3) mit einem zumindest nahezu wasserfreien und rieselfähigen Flussmittel (2) bestreut wird, welches auf der Oberfläche (3) des Bauteils (5) haften bleibt.

2. Verfahren nach Anspruch 1,
**dadurch gekennzeichnet,**
- **dass** dem Flussmittel (2) ein Agglomerationsmittel, insbesondere ein Wachs, ein thermisch zersetzbares Harz, ein Polyvinylalkohol oder ein Kleber zugegeben wird, oder
- **dass** ein auf der Bauteiloberfläche (3) vorhandener Ölfilm als Agglomerationsmittel verwendet wird.

3. Verfahren nach Anspruch 1 oder nach Anspruch 2, erste Alternative,
**dadurch gekennzeichnet,**
**dass** das Bauteil (5) vor dem Aufbringen des Flussmittels (2) entfettet, insbesondere thermisch entfettet, wird.

4. Vorrichtung (1) zum automatisierten Aufbringen von Flussmittel (2) auf eine Bauteiloberfläche (3) mit einer Rieselkabine (4), in welcher das zu befluxende Bauteil (5) mit einem zumindest nahezu wasserfreien und rieselfähigen Flussmittel (2) berieselt wird, wobei das Flussmittel (2) aufgrund einer Haftwirkung auf der Oberfläche (3) des Bauteils (5) haften bleibt.

5. Vorrichtung nach Anspruch 4,
**dadurch gekennzeichnet,**
**dass** die Vorrichtung (1) eine Fördereinrichtung (6), insbesondere ein Fließband, aufweist, auf welchem das zu befluxende Bauteil (5) durch die Rieselkabine (4) gefahren wird.

6. Vorrichtung nach Anspruch 4 oder 5,
**dadurch gekennzeichnet,**
**dass** eine der Vorrichtung (1) vorgeschaltete Entfettungsstation (11) vorgesehen ist, in welcher das Bauteil (5) entfettet wird.

7. Vorrichtung nach einem der Ansprüche 4 bis 6,
**dadurch gekennzeichnet,**
**dass** bodenseitig der Rieselkabine (4) ein Sammelraum (7) für das rieselfähige Flussmittel (2) angeordnet ist, wobei der Sammelraum (7) über einen Pulverförderer (8) mit einer deckenseitig der Rieselkabine (4) angeordneten Rieseldüse (9) verbunden ist.

8. Vorrichtung nach Anspruch 7,
**dadurch gekennzeichnet,**
**dass** der Pulverförderer (8) als Gebläse oder als Schneckenförderer ausgebildet ist.

9. Vorrichtung nach einem der Ansprüche 4 bis 8,
**dadurch gekennzeichnet,**
**dass** ein der Vorrichtung (1) nachgeschalteter Ofen (12) vorgesehen ist, in welchem das zu verlötende Bauteil (5) erhitzt und gleichzeitig das Agglomerationsmittel des Flussmittels (2) zumindest teilweise zersetzt wird.

10. Rieselfähiges Flussmittel (2) zur Verwendung in dem Verfahren gemäß der Ansprüche 1 bis 3 und der Vorrichtung gemäß den Ansprüchen 4 bis 9, wobei das Flussmittel (2) ein Agglomerationsmittel, insbesondere ein Wachs, ein thermisch zersetzbares Harz, einen Polyvinylalkohol oder einen Kleber, aufweist.

11. Flussmittel nach Anspruch 10,
**dadurch gekennzeichnet,**
**dass** das Flussmittel (2) 0,5-10% organischen Kleber, aliphatische Wachse, Polyvinylalkohol und/oder thermisch zersetzbares Harz, aufweist.
